# EUROPEAN PATENT SPECIFICATION

(11) **EP 4 296 590 B1**
(45) Date of publication and mention of the grant of the patent: **06.08.2025**
(21) Application number: 22756285.7
(22) Date of filing: 18.02.2022
(51) Int. Cl.: F24F 13/28, F24F 13/22, F24F 3/12, F24F 3/14, F24F 3/16

(54) **AIR TREATMENT APPARATUS**
LUFTBEHANDLUNGSVORRICHTUNG
DISPOSITIF DE TRAITEMENT D'AIR

(30) Priority: 19.02.2021 JP 2021025545
(43) Date of publication of application: 27.12.2023
(73) Proprietor: Daikin Industries, Ltd., Osaka-shi, Osaka 530-0001 (JP)
(72) Inventor: NISHIMURA, Masaya, Osaka-shi, Osaka 530-0001 (JP); MIYAMOTO, Eiichi, Osaka-shi, Osaka 530-0001 (JP)
(74) Representative: Conti, Marco
(86) International application number: PCT/JP2022/006517
(87) International publication number: WO 2022/176968

(56) References cited:
- WO-A1-03/001122
- CN-A- 108 731 139
- JP-A- 2001 096 119
- JP-A- 2007 071 503
- JP-A- 2008 032 303
- JP-A- 2009 097 792
- JP-A- 2009 127 944
- JP-A- 2011 122 770
- JP-A- 2019 152 389
- JP-A- 2020 193 754
- JP-B2- 4 121 116
- KR-B1- 100 963 838

## Description

### TECHNICAL FIELD

The present invention relates to an air treatment apparatus.

### BACKGROUND ART

As described in Patent Literature 1-3 (JP 2008 032303 A, KR 100 963 838 B1, JP 2020 193754 A), an air conditioner including a filter through which air flowing to a heat exchanger passing through water is known.

### SUMMARY OF THE INVENTION

### <Technical Problem>

A normal filter cannot sufficiently collect microscopic substances (bacteria, viruses, allergens, particulate matter, etc.) of 1 µm or less contained in air introduced from the outdoors to the indoors or air circulating from the indoors to the indoors and flowing to a heat exchanger, and there is a risk that the microscopic substances might be sent indoors.

### <Solution to Problem>

Aim of the present invention is to provide an air treatment apparatus which improves the state of the art indicated above. This aim is achieved by the air treatment apparatus according to the corresponding appended claims.

An air treatment apparatus according to claim 1 includes a heat exchanger and a first collection member.

The air treatment apparatus according to the invention collects, with the first collection member, a microscopic substance contained in outdoor or indoor air, upstream of the heat exchanger, thereby suppressing the microscopic substance from being sent indoors.

The air treatment apparatus according to the invention promotes the inactivation of the microscopic substance collected in the first collection member, by supplying water at a predetermined temperature to the first collection member.

An air treatment apparatus according to a second aspect is the air treatment apparatus according to the invention, and further includes a fourth flow path. The fourth flow path discharges the water flowing over the surface of the first collection member or the water retained on the surface of the first collection member.

The air treatment apparatus according to the second aspect discharges the water containing the microscopic substance collected by the first collection member, so that the first collection member is kept clean.

An air treatment apparatus according to a third aspect is the air treatment apparatus according to any one of the first to second aspects, and further includes a second collection member. The second collection member is disposed downstream of the heat exchanger in the flow of the air flowing through the second flow path and collects the substance contained in the air flowing from the heat exchanger. The second collection member has a surface over which water flows or a surface on which water is retained.

The air treatment apparatus according to the third aspect, collects, with the second collection member, the microscopic substance contained in outdoor or indoor air, downstream of the heat exchanger, thereby suppressing the microscopic substance from being sent indoors.

An air treatment apparatus according to a fourth aspect is the air treatment apparatus according to the third aspect, and further includes a fifth flow path. The fifth flow path supplies water at a predetermined temperature to at least one of the first collection member and the second collection member.

The air treatment apparatus according to the fourth aspect promotes the inactivation of the microscopic substance collected by the first collection member or the second collection member, by adjusting the temperature of the first collection member or the second collection member.

An air treatment apparatus according to a fifth aspect is the air treatment apparatus according to any one of the first to fourth aspects, and further includes a filter having lower air flow resistance than the first collection member.

The air treatment apparatus according to the fifth aspect collects, with the filter, a microscopic substance that is difficult to be collected by the first collection member.

An air treatment apparatus according to a sixth aspect is the air treatment apparatus according to the fifth aspect, in which the filter is disposed between the first collection member and the heat exchanger in a direction of the air flowing through the second flow path.

The air treatment apparatus according to the sixth aspect collects, with the filter, the microscopic substance that have passed through the first collection member.

An air treatment apparatus according to an seventh aspect is the air treatment apparatus according to any one of the first to sixth aspects, and supplies water heat-exchanged with a refrigerant circulating in a refrigeration cycle to the first collection member.

The air treatment apparatus according to the seventh aspect adjusts the temperature of the air sent indoors by, for example, supplying water cooled by heat exchange with the refrigerant to the first collection member.

An air treatment apparatus according to a eighth aspect is the air treatment apparatus according to any one of the first to seventh aspects, in which the first collection member forms a sixth flow path that allows air passing through the first collection member to flow through and that is non-parallel to a direction of the air flow flowing through the second flow path.

The air treatment apparatus according to the eighth aspect makes it easier for the air passing through the first collection member to collide with the first collection member, thereby enhancing the collection effect of the first collection member in collecting the microscopic substance.

An air treatment apparatus according to a ninth aspect is the air treatment apparatus according to any one of the first to eighth aspects, in which the water flowing over the surface of the first collection member, or the water retained on the surface of the first collection member, contains a component that inactivates the substance.

The air treatment apparatus according to the ninth aspect keeps the first collection member clean.

An air treatment apparatus according to an tenth aspect is the air treatment apparatus according to any one of the first to ninth aspects, in which the first collection member carries a component that is hardly eluted in water and inactivates the substance.

The air treatment apparatus according to the tenth aspect keeps the first collection member clean.

An air treatment apparatus according to a eleventh aspect is the air treatment apparatus according to any one of the first to tenth aspects, in which the first collection member carries a photocatalyst that generates a component that inactivates the substance when irradiated with light.

The air treatment apparatus according to the eleventh aspect keeps the first collection member clean.

An air treatment apparatus according to a twelfth aspect is the air treatment apparatus according to any one of the first to eleventh aspects, in which the first collection member is configured to be replaceable.

The air treatment apparatus according to the twelfth aspect can use an appropriate first collection member depending on the type of substance to be collected.

### BRIEF DESCRIPTION OF THE DRAWINGS

FIG. 1 is a schematic diagram of a refrigerant circuit of an air conditioner 101.
FIG. 2 is a top view illustrating the internal structure of an indoor unit 102.
FIG. 3 is a side view illustrating the internal structure of the indoor unit 102.
FIG. 4 is a top view illustrating the internal structure of the indoor unit 102 according to Modification A.
FIG. 5 is a side view illustrating the internal structure of the indoor unit 102 according to Modification A.
FIG. 6 is a top view illustrating the internal structure of the indoor unit 102 according to Modification B.
FIG. 7 is a side view illustrating the internal structure of the indoor unit 102 according to Modification B.
FIG. 8 is a schematic view of a first humidifying element 23 according to Modification C as viewed from the direction along an air flow path 42.
FIG. 9 is a schematic view of a first water-absorbing member 23a according to Modification C as viewed from the direction of arrow V in FIG. 8.
FIG. 10 is a schematic view of a second water-absorbing member 23b according to Modification C as viewed from the direction of the arrow V in FIG. 8.
FIG. 11 is a top view illustrating the internal structure of an air handling unit 202 according to Modification I.
FIG. 12 is a side view illustrating the internal structure of the air handling unit 202 according to Modification I.
FIG. 13 is a schematic view of the first water-absorbing member 23a according to Modification M as viewed from the direction of the arrow V in FIG. 8.
FIG. 14 is a schematic view of the second water-absorbing member 23b according to Modification M as viewed from the direction of the arrow V in FIG. 8.
FIG. 15 is a schematic view of the first water-absorbing member 23a or second water-absorbing member 23b according to Modification M as viewed from the direction of the arrow V in FIG. 8. This figure illustrates a modification of a water-absorbing element 23c.

### DESCRIPTION OF EMBODIMENT

### (1) Configuration of Air Conditioner 101

The air conditioner 101 has an indoor unit 102 installed in a building and an outdoor unit 103 installed outdoors. The indoor unit 102 is installed, for example, in the ceiling space of a target space. The target space is a space, the temperature of which is to be at least adjusted by the air conditioner 101. The target space is, for example, the indoor space of a building. The indoor unit 102 and the outdoor unit 103 are connected to each other via a refrigerant pipe 104, thereby constituting a refrigerant circuit of the air conditioner 101. The air conditioner 101 includes vapor compression refrigeration cycle for cooling operation, heating operation, and the like in the target space. An air treatment apparatus according to the present invention corresponds to the indoor unit 102.

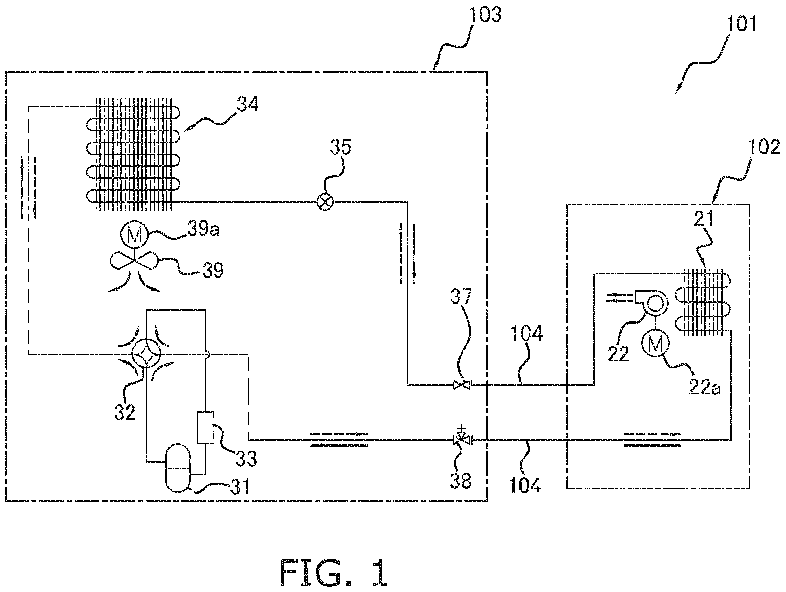

As illustrated in FIG. 1, the refrigerant circuit of the air conditioner 101 is composed mainly of an indoor heat exchanger 21, a compressor 31, a four-way switching valve 32, an accumulator 33, an outdoor heat exchanger 34, an expansion valve 35, a liquid-side shutoff valve 37, and a gas-side shutoff valve 38. The air conditioner 101 also has an indoor fan 22 and an outdoor fan 39.

The indoor heat exchanger 21 and the indoor fan 22 are provided inside the indoor unit 102. The compressor 31, the four-way switching valve 32, the accumulator 33, the outdoor heat exchanger 34, the expansion valve 35, the liquid-side shutoff valve 37, the gas-side shutoff valve 38, and the outdoor fan 39 are provided inside the outdoor unit 103. In FIG. 1, the flow of refrigerant during the cooling operation is indicated by a solid arrow, and the flow of refrigerant during the heating operation is indicated by a dotted arrow.

The indoor heat exchanger 21 has heat transfer tubes and fins attached to the heat transfer tubes. The indoor heat exchanger 21 exchanges heat between the refrigerant flowing inside the heat transfer tubes and the air passing through the fins. The indoor heat exchanger 21 functions as a heat absorber (evaporator) during the cooling operation and cools the air passing through the fins. The indoor heat exchanger 21 functions as a radiator (condenser) during the heating operation and heats the air passing through the fins.

The compressor 31 compresses the gaseous refrigerant sent from the accumulator 33. The refrigerant compressed by the compressor 31 is sent to the outdoor heat exchanger 34 during the cooling operation, and sent to the indoor heat exchanger 21 during the heating operation.

The four-way switching valve 32 is a mechanism for switching between the refrigerant circuit during the cooling operation and the refrigerant circuit during the heating operation.

The accumulator 33 is connected to the suction side of the compressor 31, and performs gas-liquid separation of the refrigerant before the refrigerant is sucked into the compressor 31.

The outdoor heat exchanger 34 has heat transfer tubes and fins attached to the heat transfer tubes. The outdoor heat exchanger 34 exchanges heat between the refrigerant flowing inside the heat transfer tubes and the air passing through the fins. The outdoor heat exchanger 34 functions as a radiator (condenser) during the cooling operation, and functions as a heat absorber (evaporator) during the heating operation.

The expansion valve 35 is provided at the position through which the refrigerant, discharged from the radiator and before being sucked into the heat absorber, passes. The expansion valve 35 decompresses the high-temperature and high-pressure refrigerant discharged from the radiator to a state in which the refrigerant is easily evaporated in the heat absorber.

The liquid-side shutoff valve 37 is provided between the expansion valve 35 and the refrigerant pipe 104.

The gas-side shutoff valve 38 is provided between the four-way switching valve 32 and the refrigerant pipe 104.

The outdoor fan 39 discharges the air subjected to heat exchange in the outdoor heat exchanger 34 from the outdoor unit 103. The outdoor fan 39 is driven by an outdoor fan motor 39a.

### (2) Configuration of Indoor Unit 102

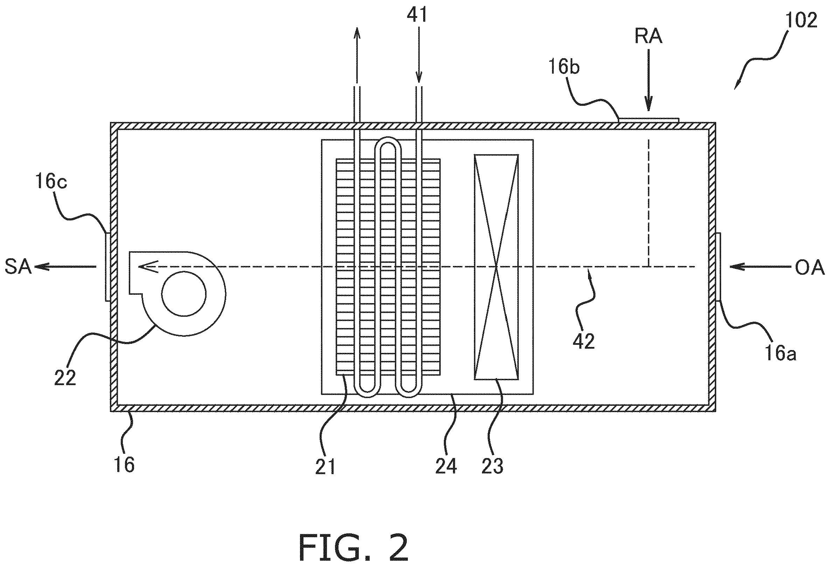

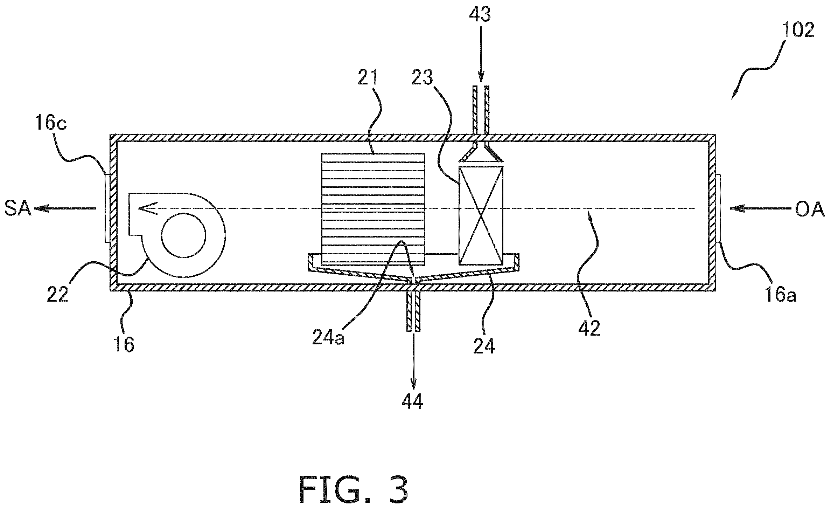

As illustrated in FIGS. 2 and 3, the indoor unit 102 has a casing 16, the indoor heat exchanger 21, the indoor fan 22, a first humidifying element 23, and a drain pan 24. The indoor unit 102 takes in outdoor air OA and indoor air RA, causes the air to pass through the first humidifying element 23 and the indoor heat exchanger 21 in this order, and supplies the air as supply air SA to the target space. The outdoor air OA is air that is introduced from the outdoors to the indoors. The indoor air RA is air that circulates from the indoors to the indoors. The supply air SA is air, the temperature of which has been at least adjusted by the air conditioner 101.

### (2-1) Casing 16

The casing 16 is installed in the ceiling space of the target space. The casing 16 has a rectangular parallelepiped shape. The indoor heat exchanger 21, the indoor fan 22, the first humidifying element 23, and the drain pan 24 are provided inside the casing 16.

The casing 16 has a first opening 16a for taking in the outdoor air OA from the outdoors, a second opening 16b for taking in the indoor air RA from the target space, and a third opening 16c for supplying the supply air SA to the target space. With the indoor unit 102 installed in the ceiling space of the target space, the third opening 16c of the casing 16 is open at the ceiling height position of the target space. During the operation of the air conditioner 101, an air flow path 42 from the first opening 16a and the second opening 16b to the third opening 16c is formed in the internal space of the casing 16. In the air flow path 42, the outdoor air OA taken in from the first opening 16a and the indoor air RA taken in from the second opening 16b merge and flow toward the third opening 16c.

An electric component box is provided inside the casing 16. The electric component box houses a control unit that is a microcomputer for controlling each component of the indoor unit 102. An object to be controlled by the control unit is, for example, an indoor fan motor 22a that drives the indoor fan 22.

### (2-2) Indoor Heat Exchanger 21

The indoor heat exchanger 21 is disposed in the air flow path 42 inside the casing 16. The air flowing through the air flow path 42 (second flow path) is heat-exchanged with the refrigerant flowing through a refrigerant flow path 41 (first flow path) inside the heat transfer tubes of the indoor heat exchanger 21, when passing through the indoor heat exchanger 21. In other words, the indoor heat exchanger 21 exchanges heat between the fluid flowing through the refrigerant flow path 41 and the air flowing through the air flow path 42. The air flowing through the air flow path 42 is heated or cooled by the indoor heat exchanger 21.

### (2-3) Indoor Fan 22

The indoor fan 22 is disposed inside the casing 16. The indoor fan 22 is disposed downstream of the indoor heat exchanger 21 in the flow of air flowing through the air flow path 42. As illustrated in FIG. 2, the indoor fan 22 is disposed near the third opening 16c. The indoor fan 22 is driven by the indoor fan motor 22a to take the outdoor air OA and the indoor air RA into the casing 16 and supply the supply air SA to the target space. In other words, when the indoor fan 22 is driven, a flow of air flowing through the air flow path 42 is formed in the internal space of the casing 16.

### (2-4) First Humidifying Element 23

The first humidifying element 23 is disposed in the air flow path 42 inside the casing 16. The first humidifying element 23 is disposed upstream of the indoor heat exchanger 21 in the flow of air flowing through the air flow path 42.

The first humidifying element 23 has a structure in which a plurality of water-absorbing members are combined. The water-absorbing members are, for example, porous ceramics or nonwoven fabrics. The water-absorbing members have shapes such as lattice, corrugated plate, and honeycomb. The first humidifying element 23 has water absorption, water retention, and ventilation properties due to the gap formed between the combined water-absorbing members and the porous structure of the water-absorbing members.

During the operation of the air conditioner 101, water is supplied to the first humidifying element 23 from a water supply source (not illustrated) through a first water supply flow path 43 (third flow path). The water supply source is, for example, a water supply tank installed inside or outside the indoor unit 102, or water supply in a building. As shown in FIG. 3, when water is supplied, from above, to the first humidifying element 23 from the first water supply flow path 43, the water-absorbing members of the first humidifying element 23 absorb and retain water. The water retained in the water-absorbing members flows downward by gravity and finally flows out of the first humidifying element 23. Thus, during the operation of the air conditioner 101, the first humidifying element 23 has a surface over which water flows or a surface on which water is retained.

The air passing through the first humidifying element 23 vaporizes the water retained by the water-absorbing members of the first humidifying element 23. Thus, the air flowing through the air flow path 42 is humidified by passing through the first humidifying element 23. The air that has passed through the first humidifying element 23 flows toward the indoor heat exchanger 21.

In the air flow path 42 inside the casing 16, first, the outdoor air OA and the indoor air RA taken into the casing 16 merge. Next, the merged air passes through the first humidifying element 23. Next, the air that has passed through the first humidifying element 23 passes through the indoor heat exchanger 21. Next, the air that has passed through the indoor heat exchanger 21 is supplied to the target space from inside the casing 16 as the supply air SA. The supply air SA is air that has been humidified by the first humidifying element 23 and temperature-adjusted by the indoor heat exchanger 21.

The first humidifying element 23 collects a substance to be collected that is contained in the air passing through the first humidifying element 23. The substance to be collected is a microscopic substance (corresponding to "substance" disclosed in claim 1) that may adversely affect humans or animals in the target space when supplied to the target space together with the supply air SA. The size of the microscopic substance is, for example, 1 µm or less. The substance to be collected is, for example, an infectious substance, an allergen, and particulate matter. The infectious substance includes a pathogen. The pathogen is a microorganism (for example, bacteria, viruses, parasites, fungi) and other substances (for example, prions), including non-living organisms, which can cause disease in humans or animals. The allergen is a substance that causes allergic symptoms in humans, and is, for example, house dust and pollen. The particulate matter is solid and liquid fine particles, for example, soot, dust, and exhaust gas. The substance to be collected that is contained in the air flowing through the air flow path 42 is collected by coming into contact with the water retained in the water-absorbing members of the first humidifying element 23 and mixing with the water retained in the water-absorbing members. The substance collected by the first humidifying element 23 is retained by the water-absorbing members or flows out of the first humidifying element 23 together with the water flowing downward through the water-absorbing members.

### (2-5) Drain Pan 24

As illustrated in FIG. 3, the drain pan 24 is disposed below the first humidifying element 23. The drain pan 24 is a container that receives the water flowing out of the first humidifying element 23. The casing 16 may have an inspection opening for taking out the drain pan 24 from inside the casing 16. In this case, the first humidifying element 23 and the drain pan 24 can be easily inspected and cleaned by taking out the drain pan 24 from the inspection opening.

As shown in FIG. 3, the drain pan 24 may be disposed below both the first humidifying element 23 and the indoor heat exchanger 21. In this case, the drain pan 24 can also receive water that adheres to the indoor heat exchanger 21 during the cooling operation and falls from the lower end of the indoor heat exchanger 21.

As illustrated in FIG. 3, a drain port 24a for discharging water accumulated in the drain pan 24 is formed in the lower portion of the drain pan 24. The drain port 24a is connected to a drain flow path 44 (fourth flow path) for sending water accumulated in the drain pan 24 to the outdoors or the like. The indoor unit 102 may have a pump for discharging water accumulated in the drain pan 24 to the outdoors or the like instead of the drain port 24a of the drain pan 24 or together with the drain port 24a.

### (3) Characteristics

The first humidifying element 23 of the indoor unit 102 collects the substance to be collected that is contained in the outdoor air OA and the indoor air RA, upstream of the indoor heat exchanger 21 in the air flow path 42. Since the substance to be collected is collected by the first humidifying element 23, the indoor unit 102 can suppress the supply air SA containing the substance to be collected from being sent to the target space.

In addition, since the substance to be collected is collected by the first humidifying element 23, the adhesion of the substance to be collected to the indoor heat exchanger 21 is suppressed. Therefore, the indoor unit 102 can suppress contamination of the indoor heat exchanger 21, and can suppress a decrease in heat exchange efficiency due to the substance to be collected adhering to the indoor heat exchanger 21.

In addition, water flowing over the surface of the first humidifying element 23 or water retained on the surface of the first humidifying element 23 flows out from the first humidifying element 23 by gravity. Therefore, the substance collected by the first humidifying element 23 flows out from the first humidifying element 23 to the drain pan 24 together with water, and is discharged from the indoor unit 102. Thus, the indoor unit 102 can keep the first humidifying element 23 clean by supplying clean water containing no substance to be collected to the first humidifying element 23.

### (4) Invention

The indoor unit 102 according to the invention supplies water at a predetermined temperature to the first humidifying element 23 from the water supply source through the first water supply flow path 43. In this case, by supplying water at a predetermined temperature to the first humidifying element 23, the indoor unit 102 can promote the inactivation of the substance collected by the first humidifying element 23 and can adjust the temperature of the supply air SA that passes through the first humidifying element 23 to the target space. If the substance to be collected is a microorganism, the water at a predetermined temperature is water at a temperature at which the growth of the microorganism is suppressed in the first humidifying element 23 or at a temperature at which the microorganism is killed. The predetermined temperature is, for example, 45°C or higher.

In this case, the water at the predetermined temperature to be supplied to the first humidifying element 23 may be water supplied from an external water supply source and heated by heat exchange with the refrigerant circulating in the refrigeration cycle of the air conditioner 101. For example, the water at the predetermined temperature to be supplied to the first humidifying element 23 may be water heated by bringing tap water into contact with a refrigerant pipe through which the refrigerant after passing through a radiator (condenser) flows, and then exchanging heat with the refrigerant. In this case, for example, tap water heated by heat exchange with the refrigerant immediately before passing through the expansion valve 35 is preferably used as water at the predetermined temperature.

Furthermore, in the present modification, the indoor unit 102 may cool the air passing through the first humidifying element 23 by supplying cooling water to the first humidifying element 23 during the cooling operation of the air conditioner 101. Thus, the thermal loads on the indoor heat exchanger 21 and the outdoor heat exchanger 34 are reduced. In this case, as the cooling water, tap water cooled by heat exchange with the refrigerant circulating in the refrigeration cycle of the air conditioner 101 may be used.

Furthermore, in the present modification, the indoor unit 102 may heat the air passing through the first humidifying element 23 by supplying water at a predetermined temperature to the first humidifying element 23 during the heating operation of the air conditioner 101. Thus, the thermal loads on the indoor heat exchanger 21 and the outdoor heat exchanger 34 are reduced. In this case, as the water at the predetermined temperature, tap water that has not been heat exchanged with the refrigerant circulating in the refrigeration cycle of the air conditioner 101, or water supplied from a hot water supply apparatus or the like outside the indoor unit 102 may be used.

### (4-2) Modification A

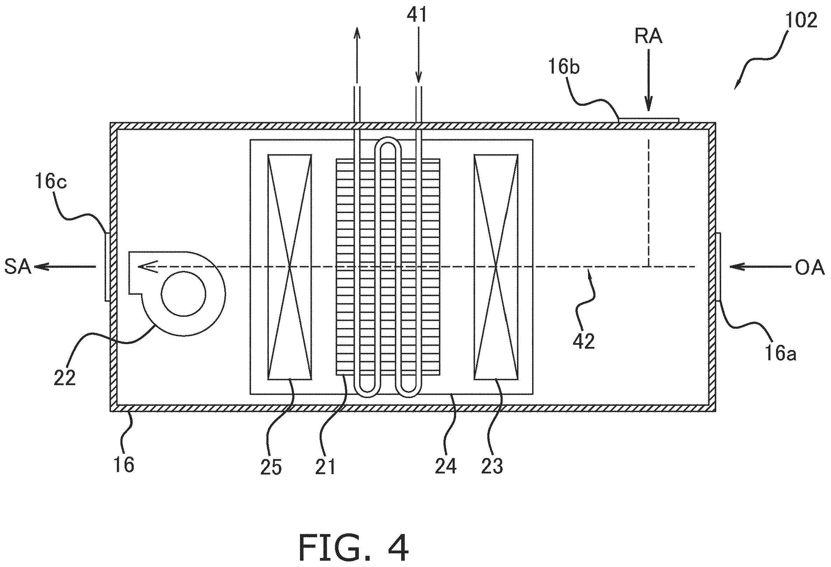

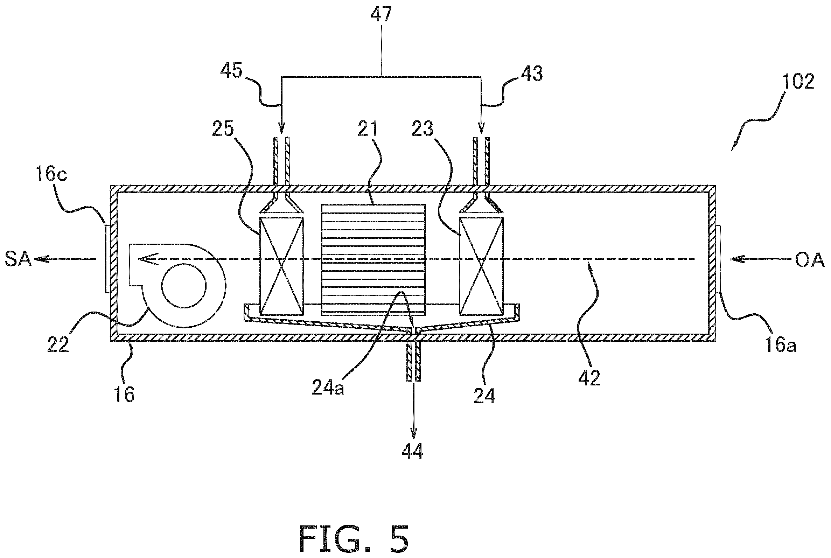

As illustrated in FIGS. 4 and 5, the indoor unit 102 may further include a second humidifying element 25 in addition to the first humidifying element 23. The second humidifying element 25 is disposed in the air flow path 42 inside the casing 16. The second humidifying element 25 is disposed downstream of the indoor heat exchanger 21 in the flow of air flowing through the air flow path 42, and is disposed upstream of the indoor fan 22 in the flow of the air flowing through the air flow path 42.

The second humidifying element 25 has a structure in which a plurality of water-absorbing members are combined. The water-absorbing members are, for example, porous ceramics or nonwoven fabrics. The water-absorbing members have shapes such as lattice, corrugated plate, and honeycomb. The second humidifying element 25 has water absorption, water retention, and ventilation properties due to the gap formed between the combined water-absorbing members and the porous structure of the water-absorbing members. The second humidifying element 25 may be the same member as the first humidifying element 23.

During the operation of the air conditioner 101, water is supplied to the second humidifying element 25 from a water supply source (not illustrated) through a second water supply flow path 45 (fifth flow path). As shown in FIG. 5, when water is supplied, from above, to the second humidifying element 25 from the second water supply flow path 45, the water-absorbing members of the second humidifying element 25 absorb and retain water. The water retained in the water-absorbing members flows downward by gravity and finally flows out of the second humidifying element 25. Thus, during the operation of the air conditioner 101, the second humidifying element 25 has a surface over which water flows or a surface on which water is retained.

The air passing through the second humidifying element 25 vaporizes the water retained by the water-absorbing members of the second humidifying element 25. Thus, the air flowing through the air flow path 42 is humidified by passing through the second humidifying element 25. The air that has passed through the second humidifying element 25 flows toward the third opening 16c.

In the present modification, as illustrated in FIG. 5, the drain pan 24 is disposed below the first humidifying element 23 and the second humidifying element 25. The water flowing out of the water-absorbing members of the second humidifying element 25 is stored in the drain pan 24.

The second humidifying element 25 collects the substance to be collected that is contained in the air passing through the indoor heat exchanger 21 in the air flow path 42. In the present modification, the second humidifying element 25 collects the substance to be collected that has not been collected by the first humidifying element 23, thereby suppressing the supply air SA containing the substance to be collected from being sent to the target space.

In the present modification, as in Modification A, the indoor unit 102 may supply water at a predetermined temperature to the second humidifying element 25 through the second water supply flow path 45 for the second humidifying element 25. In this case, by supplying water at a predetermined temperature to the second humidifying element 25, the indoor unit 102 can adjust the temperature of the supply air SA that passes through the second humidifying element 25 to the target space.

In the present modification, as illustrated in FIG. 5, the first water supply flow path 43 for the first humidifying element 23 and the second water supply flow path 45 for the second humidifying element 25 may be branched from a single common flow path 47 that is connected to the water supply source. In this case, water at the same temperature can be supplied to both the first humidifying element 23 and the second humidifying element 25. If the first water supply flow path 43 for the first humidifying element 23 and the second water supply flow path 45 for the second humidifying element 25 are connected to different water supply sources, water at a predetermined temperature may be supplied to at least one of the first humidifying element 23 and the second humidifying element 25.

In the present modification, the temperature of the first humidifying element 23 and the second humidifying element 25 is controlled by adjusting the temperature of water supplied to the first humidifying element 23 and the second humidifying element 25. If the substance to be collected is a substance, the active state of which changes depending on the temperature, for example, microorganisms such as bacteria and viruses, the collected microorganisms can be inactivated by appropriately controlling the temperatures of the first humidifying element 23 and the second humidifying element 25. Inactivation is to suppress the growth of microorganisms or to kill microorganisms. Thus, the growth of microorganisms adhering to the first humidifying element 23 and the second humidifying element 25 is suppressed, and the first humidifying element 23 and the second humidifying element 25 are deodorized.

### (4-3) Modification B

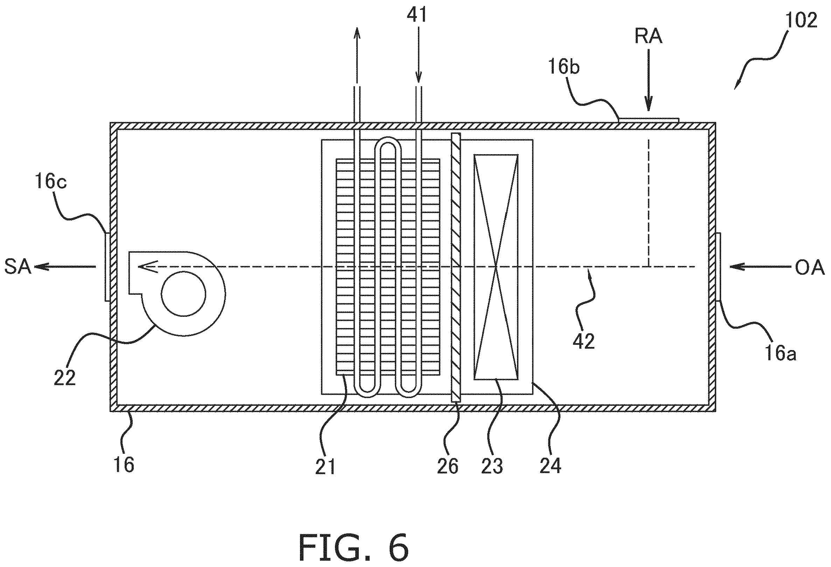

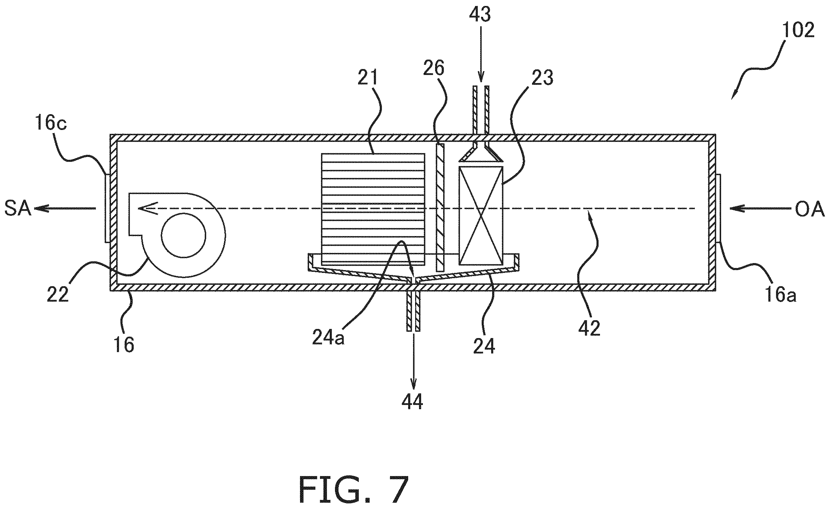

As illustrated in FIGS. 6 and 7, the indoor unit 102 may further include a filter 26 having lower air flow resistance than the first humidifying element 23. The filter 26 is disposed in the air flow path 42 inside the casing 16. The filter 26 is disposed between the first humidifying element 23 and the indoor heat exchanger 21 in the direction of the air flowing through the air flow path 42. The filter 26 collects foreign matter contained in the air that has passed through the first humidifying element 23. The filter 26 may be disposed upstream of the first humidifying element 23 in the flow of the air flowing through the air flow path 42.

In the present modification, the indoor unit 102 may further include the second humidifying element 25 according to Modification A. In this case, the filter 26 may be disposed between the second humidifying element 25 and the indoor heat exchanger 21 or between the second humidifying element 25 and the indoor fan 22 in the direction of the air flowing through the air flow path 42.

### (4-4) Modification C.

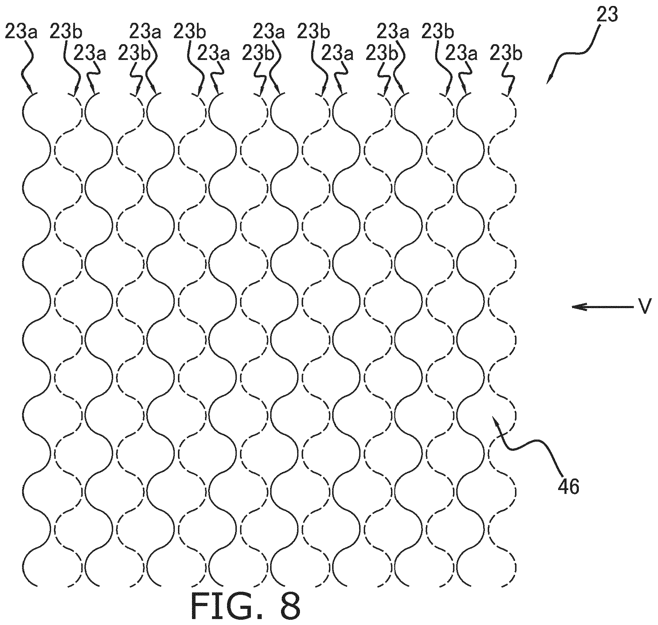

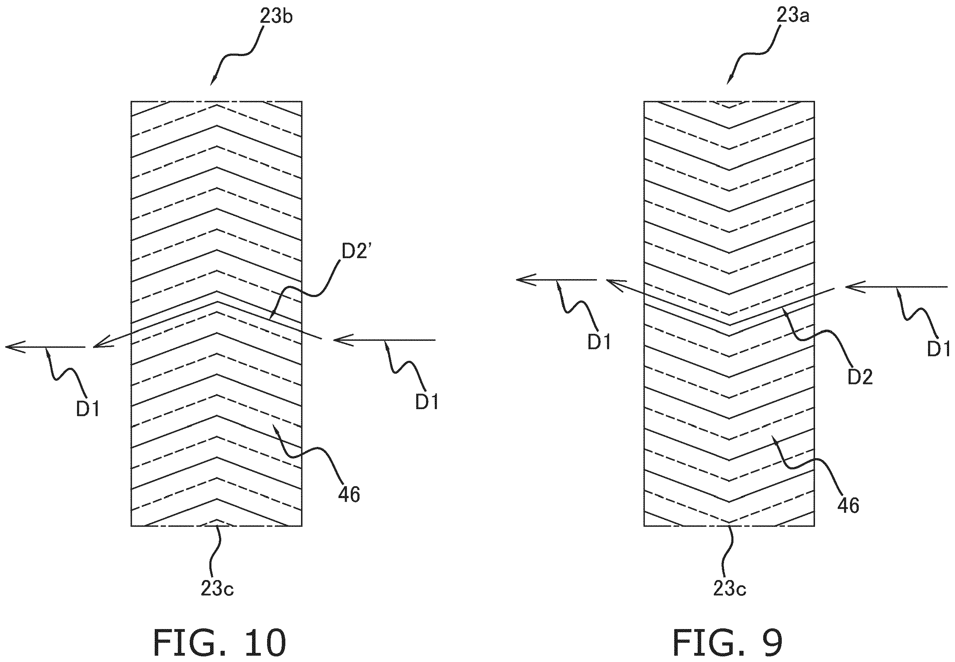

The first humidifying element 23 has a structure in which a plurality of water-absorbing members are combined. The air passing through the first humidifying element 23 passes through a humidification flow path 46 (sixth flow path) that is a space between the plurality of combined water-absorbing members. As shown in FIG. 8, when viewed along the direction of the air flowing through the air flow path 42, the first humidifying element 23 has a structure similar to a honeycomb structure in which a large number of cells are regularly arranged. Each cell in FIG. 8 represents the inlet or outlet of the humidification flow path 46. In FIGS. 9 and 10, the flow of air flowing through the air flow path 42 is indicated by first arrow D1, and an example of the flow of air flowing through the humidification flow path 46 is indicated by second arrows D2 and D2'. The first arrow D1 indicates the flow direction of the air before passing through the first humidifying element 23 and after passing through the first humidifying element 23.

As shown in FIG. 8, when viewed along the direction of the first arrow D1, the first humidifying element 23 has a configuration in which a first water-absorbing member 23a and a second water-absorbing member 23b are alternately arranged. The humidification flow path 46 corresponds to the space between the first water-absorbing member 23a and the second water-absorbing member 23b. In FIG. 8, the first water-absorbing member 23a and the second water-absorbing member 23b extend along the vertical direction.

As shown in FIGS. 9 and 10, when viewed from the direction (direction of arrow V in FIG. 8) orthogonal to the first arrow D1 and vertical direction, each of the first water-absorbing member 23a and the second water-absorbing member 23b is configured from a single water-absorbing element 23c. The water-absorbing element 23c is a plate-shaped member with V-shaped recessed and protruding portions formed at predetermined intervals along the direction (vertical direction) intersecting the direction of the first arrow D1. In FIGS. 9 and 10, solid lines represent protruding portions and dotted lines represent recessed portions. The second arrow D2 indicates an example of the flow of air along the recessed and protruding portions of the water-absorbing element 23c of the first water-absorbing member 23a. The second arrow D2' indicates an example of the flow of air along the recessed and protruding portions of the water-absorbing element 23c of the second water-absorbing member 23b. The second arrows D2 and D2' are along the recessed and protruding portions of the water-absorbing element 23c, and therefore are not parallel to the first arrow D1. The water retained by the water-absorbing element 23c flows while falling downward from above, for example.

When viewed along the first arrow D1, the water-absorbing elements 23c adjacent to each other along the direction in which the first water-absorbing member 23a and the second water-absorbing member 23b are aligned are arranged such that the orientations of the V-shapes of the recessed and protruding portions are opposite to each other. Specifically, in the first water-absorbing member 23a, as shown in FIG. 9, the water-absorbing element 23c is disposed such that the V-shapes of the recessed and protruding portions are in as-is orientation. Furthermore, in the second water-absorbing member 23b, as shown in FIG. 10, the water-absorbing element 23c is disposed such that the V-shapes of the recessed and protruding portions are in the upside-down orientation. Therefore, some of the air flowing in from one of the cells shown in FIG. 8 flows upward along the first water-absorbing member 23a, and the rest flows downward along the second water-absorbing member 23b. Thus, the air flowing through the humidification flow path 46 repeatedly divides and merges inside the first humidifying element 23.

Therefore, in the present modification, the air flowing through the air flow path 42 tends to collide with the water-absorbing element 23c that retains water, when passing through the humidification flow path 46 of the first humidifying element 23. Therefore, the air passing through the first humidifying element 23 is easily humidified, and the collection effect of the first humidifying element 23 in collecting the substance to be collected is enhanced.

The present modification can also be applied to the second humidifying element 25 according to Modification A.

### (4-5) Modification D

The water supplied to the first humidifying element 23 may contain a component that inactivates the substance to be collected. For example, if the substance to be collected is bacteria, the water supplied to the first humidifying element 23 may be water containing a strongly oxidizing substance having bactericidal or antibacterial properties, such as hydroxy radicals and hydrogen peroxide. In this case, the water flowing over the surface of the first humidifying element 23 or the water retained on the surface of the first humidifying element 23 has the effect of promoting the inactivation of the substance to be collected. If the substance to be collected is non-living matter such as particulate matter, the water supplied to the first humidifying element 23 may be water containing a component that decomposes the substance to be collected or a component that reduces the influence of the substance to be collected on humans or animals.

In the present modification, the water flowing over the surface of the first humidifying element 23 or the water retained on the surface of the first humidifying element 23 has the effect of promoting the inactivation of the substance to be collected that adheres to the first humidifying element 23. Thus, contamination of the first humidifying element 23 with the substance to be collected is suppressed, so that the first humidifying element 23 can be kept clean.

The present modification can also be applied to the water supplied to the second humidifying element 25 according to Modification A.

### (4-6) Modification E

The water-absorbing members of the first humidifying element 23 may carry a substance that is hardly eluted in water and inactivates the substance to be collected. For example, the water-absorbing members of the first humidifying element 23 may carry an inorganic antibacterial agent, containing copper, silver, or the like, which is hardly eluted in water even when always in contact with water. For example, if the substance to be collected is bacteria, the antibacterial agent suppresses the growth of bacteria adhering to the first humidifying element 23 and deodorizes the first humidifying element 23.

Similarly, the water-absorbing members of the second humidifying element 25 according to Modification A and the filter 26 according to Modification may carry an antibacterial agent. Thus, the growth of bacteria adhering to the second humidifying element 25 and the filter 26 is suppressed, and the second humidifying element 25 and the filter 26 are deodorized.

### (4-7) Modification F

The water-absorbing members of the first humidifying element 23 may carry a hydrophilic photocatalyst. In this case, the indoor unit 102 further includes a light source that irradiates the first humidifying element 23 with light. The light source irradiates the first humidifying element 23 with visible light or ultraviolet light. When the photocatalyst is activated by the light emitted from the light source, the water retained in the water-absorbing members of the first humidifying element 23 is ionized, and a component that inactivates the substance to be collected is generated. If the substance to be collected is bacteria, the component that inactivates the substance to be collected is a strongly oxidizing substance having bactericidal or antibacterial properties, such as hydroxy radicals or hydrogen peroxide. In this case, the growth of bacteria adhering to the first humidifying element 23 is suppressed, and the first humidifying element 23 is deodorized.

In the present modification, the indoor unit 102 may further include a reflecting member that reflects light emitted from the light source. In this case, the light source does not directly irradiate the first humidifying element 23 with light but irradiates the reflecting member with light. Light emitted from the light source and reflected by the reflecting member is irradiated upon the first humidifying element 23 to generate a component that inactivates the substance to be collected. The reflecting member is, for example, a mirror.

Similarly, the water-absorbing members of the second humidifying element 25 according to Modification A and the filter 26 according to Modification B may carry an antibacterial agent. In this case, the indoor unit 102 further includes a light source that irradiates the second humidifying element 25 and the filter 26 with light. Thus, for example, the growth of bacteria adhering to the second humidifying element 25 and the filter 26 is suppressed, and the second humidifying element 25 and the filter 26 are deodorized. If the indoor unit 102 includes the reflecting member, light emitted from the light source and reflected by the reflecting member may be irradiated upon at least one of the first humidifying element 23, the second humidifying element 25, and the filter 26.

### (4-8) Modification G

The air conditioner 101 according to the embodiment includes a vapor compression refrigeration cycle for cooling operation, heating operation, and the like in a target space. However, the air conditioner 101 may be a ventilator including a total heat exchanger (corresponding to a "heat exchanger" disclosed in claim 1). In this case, the ventilator corresponds to the air treatment apparatus according to the present invention. The total heat exchanger exchanges heat between exhaust air (corresponding to "fluid flowing through a first flow path" disclosed in claim 1) discharged from the target space to the outdoors and supply air (corresponding to "air flowing through a second flow path" disclosed in claim 1) supplied from the outdoors to the target space, thereby allowing both heat and moisture to be returned from the exhaust air to the supply air. In this case, the first humidifying element 23 according to the embodiment may be installed in the air flow path through which the supply air flows. At least one of the second humidifying element 25 according to Modification A and the filter 26 according to Modification B may be further installed in the air flow path through which the supply air flows.

Furthermore, the air conditioner 101 as a ventilator may include two adsorption heat exchangers, which are a first adsorption heat exchanger through which the exhaust air discharged from the target space to the outdoors passes and a second adsorption heat exchanger through which the supply air supplied from the outdoors to the target space passes. The adsorption heat exchangers are so-called cross-fin-type fin-and-tube heat exchangers with adsorbents carried on the surfaces. As the adsorbent, a material capable of adsorbing moisture in the air, such as zeolite, silica gel, activated carbon, and an organic polymer material having a hydrophilic functional group, is used. In this case, the air conditioner 101 as a ventilator may switch between the flow path through which the exhaust air flows and the flow path through which the supply air flows. In other words, it may be possible to alternately switch between a state in which the exhaust air passes through the first adsorption heat exchanger and the supply air passes through the second adsorption heat exchanger and a state in which the exhaust air passes through the second adsorption heat exchanger and the supply air passes through the first adsorption heat exchanger. In this case, the first humidifying element 23 according to the embodiment may be installed in the air flow path through which the supply air flows. At least one of the second humidifying element 25 according to Modification A and the filter 26 according to Modification B may be further installed in the air flow path through which the supply air flows.

In the present modification, the air conditioner 101 as a ventilator may further include a heat exchanger for adjusting the temperature of the supply air. In this case, the heat exchanger for temperature adjustment may be a heat exchanger that is mainly installed near the target space and exchanges heat between the refrigerant and the supply air, or may be a heat exchanger that is mainly installed at a place away from the target space and exchanges heat between a medium heat-exchanged with the refrigerant and the supply air. Furthermore, if the second humidifying element 25 is installed in the air flow path through which the supply air flows, water at a predetermined temperature may be supplied to the second humidifying element 25 as in Modification A. The water at the predetermined temperature is, for example, water cooled by heat exchange with a refrigerant circulating in a refrigeration cycle outside the ventilator.

### (4-9) Modification H

The air conditioner 101 may be a device that does not have a refrigerant circuit for achieving the cooling function and the heating function. For example, the air conditioner 101 may be an air cleaner that removes foreign matter and the like from the air in the target space and sends clean air to the same target space. Alternatively, the air conditioner 101 may be an air cleaner that removes foreign matter and the like from the air in the target space and sends clean air to a different target space. In this case, the air treatment apparatus according to the present invention corresponds to the air conditioner 101. The air conditioner 101 takes in indoor air, causes the indoor air to pass through the first humidifying element 23 and the indoor heat exchanger 21 in this order, and supplies the air as supply air to the target space.

### (4-10) Modification I

The air treatment apparatus according to the present invention may be an air handling unit 202. The air handling unit 202 is an apparatus that is installed in a relatively large facility and supplies the indoors with temperature- and humidity-adjusted air from which foreign matter has been removed. The air handling unit 202 is installed indoors or outdoors. The air handling unit 202 according to the present modification has the same basic configuration as the indoor unit 102 according to the embodiment. Differences from the indoor unit 102 according to the embodiment will be mainly described below.

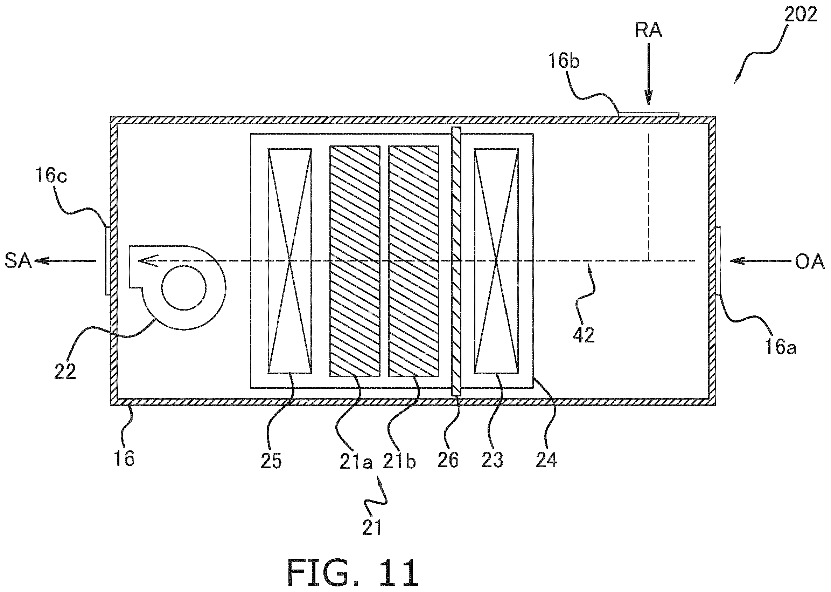

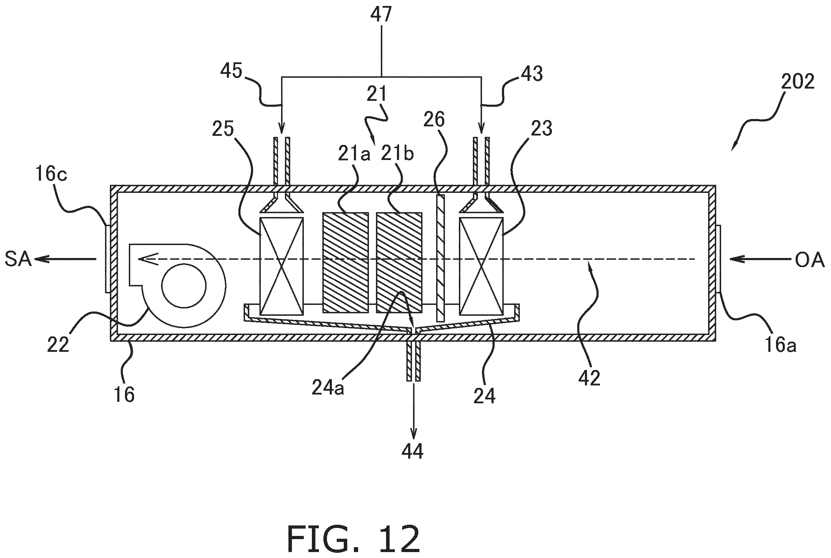

As illustrated in FIGS. 11 and 12, the air handling unit 202 includes the first humidifying element 23, the filter 26, the indoor heat exchanger 21, and the second humidifying element 25.

Similarly to the embodiment, the first humidifying element 23 collects the substance to be collected, which is contained in the outdoor air OA and the indoor air RA, upstream of the indoor heat exchanger 21 in the air flow path 42.

Similarly to Modification B the filter 26 collects foreign matter contained in the air that has passed through the first humidifying element 23.

Similarly to the embodiment, the indoor heat exchanger 21 adjusts the temperature of the air flowing through the air flow path 42. The indoor heat exchanger 21 circulates cold water or hot water serving as a fluid (corresponding to "fluid flowing through a first flow path" disclosed in claim 1) and adjusts the temperature of the air passing through the indoor heat exchanger 21. In this case, as illustrated in FIGS. 11 and 12, the indoor heat exchanger 21 may have, for example, a cold-water pipe coil 21a through which cold water flows and a hot-water pipe coil 21b through which hot water flows. The cold water and hot water used as the fluid may be supplied from different water supply sources. The cold-water pipe coil 21a is used to lower the temperature of the air passing through the indoor heat exchanger 21. The hot-water pipe coil 21b is used to increase the temperature of the air passing through the indoor heat exchanger 21. The flow paths inside the cold-water pipe coil 21a and the hot-water pipe coil 21b correspond to the refrigerant flow path 41 according to the embodiment.

Similarly to Modification A, the second humidifying element 25 collects the substance to be collected that is contained in the air that has passed through the indoor heat exchanger 21. The first humidifying element 23 and the second humidifying element 25 adjust the humidity of the air flowing through the air flow path 42.

In the present modification, as illustrated in FIG. 12, the drain pan 24 is disposed below the first humidifying element 23 and the second humidifying element 25. In the present modification, as illustrated in FIG. 12, similarly to Modification A, the first water supply flow path 43 for the first humidifying element 23 and the second water supply flow path 45 for the second humidifying element 25 may be branched from the single common flow path 47 connected to the water supply source. In this case, water flowing through the single common flow path 47 may be supplied to the cold-water pipe coil 21a. Furthermore, water flowing through the single common flow path 47 may be heated and supplied to the hot-water pipe coil 21b.

### (4-11) Modification J

The control unit of the indoor unit 102 may control the amount of water supplied from the first water supply flow path 43 to the first humidifying element 23 per unit time. For example, the control unit of the indoor unit 102 may perform control to increase the amount of water supplied to the first humidifying element 23 as the amount of the substance to be collected that is contained in the air flowing through the air flow path 42 increases. The amount of the substance to be collected is, for example, the mass of the substance to be collected that is contained in the air in the target space per unit volume. The amount of the substance to be collected is measured by, for example, a sensor installed in the target space. As the amount of water supplied to the first humidifying element 23 increases, the water containing the substance collected by the first humidifying element 23 more easily flows out from the first humidifying element 23, so that the first humidifying element 23 can be kept clean.

The present modification can also be applied to the second humidifying element 25 according to Modification A. Specifically, the control unit of the indoor unit 102 may control the amount of water supplied from the second water supply flow path 45 to the second humidifying element 25 per unit time.

### (4-12) Modification K

In the modifications described above, the indoor unit 102 may include a plurality of humidifying elements having different specifications. For example, as described in Modification A, the indoor unit 102 may include the first humidifying element 23 and the second humidifying element 25 having different specifications. The specifications of the humidifying elements are, for example, the amount of water that can be retained, the average time for which water is retained, and a usable temperature range. Similarly to the first humidifying element 23 according to the embodiment, each of the humidifying elements is supplied with water from the water supply flow path.

Since the indoor unit 102 includes the plurality of humidifying elements having different specifications, it is possible to efficiently inactivate multiple types of substances to be collected. For example, by supplying water at different temperatures to the plurality of humidifying elements depending on the type of substance to be collected, a specific type of substance to be collected can be efficiently inactivated by a specific humidifying element.

In the present modification, the plurality of humidifying elements are arranged in the air flow path 42 inside the casing 16. The positions of the plurality of humidifying elements are not limited. For example, all the plurality of humidifying elements may be disposed upstream or downstream of the indoor heat exchanger 21 in the flow of the air flowing through the air flow path 42. Furthermore, some of the plurality of humidifying elements may be disposed upstream of the indoor heat exchanger 21 in the flow of air flowing through the air flow path 42, and the rest may be disposed downstream.

### (4-13) Modification L

The first humidifying element 23 may be configured to be replaceable. Specifically, the indoor unit 102 may have a mechanism that allows the first humidifying element 23 to be easily removed or attached. In this case, maintenance work such as replacement and cleaning of the first humidifying element 23 becomes easier.

In the present modification, the indoor unit 102 may include the first humidifying element 23 having a configuration suitable for the type of substance to be collected. For example, if the first humidifying element 23 has the water-absorbing element 23c such as shown in FIGS. 9 to 10, the appropriate interval of the V-shaped recessed and protruding portions of the water-absorbing element 23c varies depending on the type of substance to be collected and the flow rate of the air flowing through the air flow path 42. Therefore, since the first humidifying element 23 is configured to be replaceable, the indoor unit 102 can include the appropriate first humidifying element 23, so that the substance to be collected can be efficiently collected.

The present modification can also be applied to the second humidifying element 25 according to Modification A.

### (4-14) Modification M

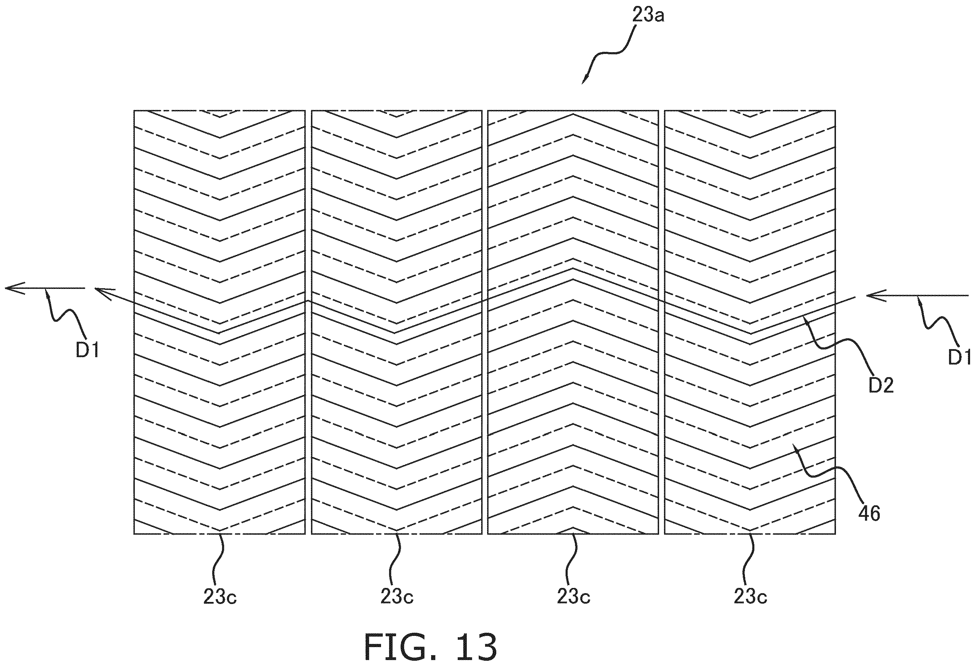

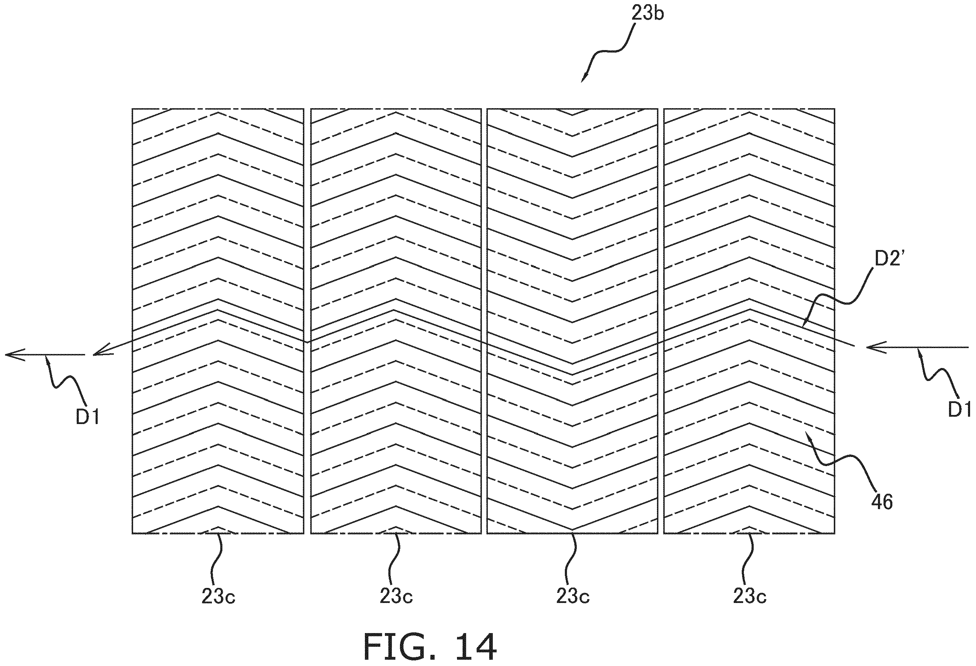

In Modification C, as shown in FIGS. 13 and 14, each of the first water-absorbing member 23a and the second water-absorbing member 23b may have a configuration in which the plurality of water-absorbing elements 23c are arranged along the first arrow D1. In FIGS. 13 and 14, solid lines represent protruding portions and dotted lines represent recessed portions. In this case, in each of the first water-absorbing member 23a and the second water-absorbing member 23b, the water-absorbing elements 23c adjacent to each other along the first arrow D1 are arranged such that the V-shaped orientations are opposite to each other. Thus, the second arrows D2 and D2' have zigzag shapes along the recessed and protruding portions of the first water-absorbing member 23a and the second water-absorbing member 23b. Therefore, the second arrows D2 and D2' are not parallel to the first arrow D1.

In the present modification, the plurality of water-absorbing elements 23c arranged along the first arrow D1 may be used under different conditions. For example, at least one of the amount, speed, and temperature of water flowing through each of the plurality of water-absorbing elements 23c arranged along the first arrow D1 may be different from each other. The temperature and humidity at which the effect of inactivating the substance to be collected is the highest vary depending on the type of substance to be collected. Therefore, at least one of the amount, speed, and temperature of water flowing through the water-absorbing elements 23c is made different among the plurality of water-absorbing elements 23c arranged along the first arrow D1, so that the first humidifying element 23 can efficiently inactivate the multiple types of substances to be collected.

Furthermore, the types of components, which are contained in the water flowing through the water-absorbing elements 23c and inactivate the substance to be collected, may be different among the plurality of water-absorbing elements 23c arranged along the first arrow D1. The component that is highly effective in inactivating the substance to be collected varies depending on the type of substance to be collected. Therefore, the types of components, which are contained in the water flowing through the water-absorbing elements 23c and inactivate the substance to be collected, are made different among the plurality of water-absorbing elements 23c arranged along the first arrow D1, so that the first humidifying element 23 can efficiently inactivate the multiple types of substances to be collected.

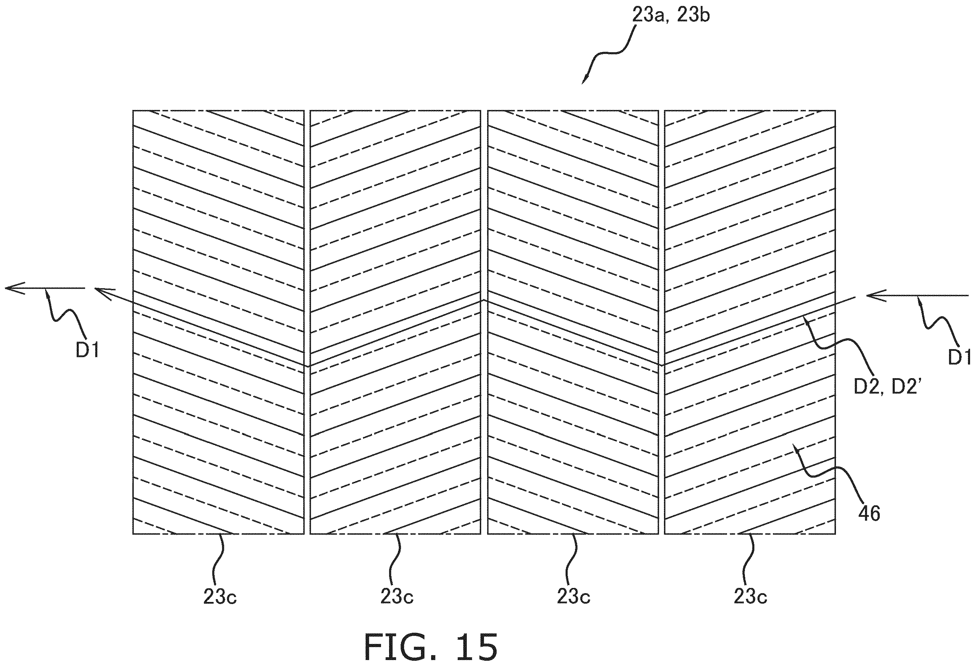

Furthermore, in the present modification, the recessed and protruding portions of the water-absorbing elements 23c of the first water-absorbing member 23a and the second water-absorbing member 23b do not have to be V-shaped. For example, as shown in FIG. 15, the recessed and protruding portions of the water-absorbing elements 23c may have a linear shape extending along a direction not parallel to the first arrow D1. In FIG. 15, solid lines represent protruding portions and dotted lines represent recessed portions. In this case, as shown in FIG. 15, by arranging the plurality of water-absorbing elements 23c along the first arrow D1, the humidification flow path 46 can be formed in a V shape, as in FIGS. 9 and 10.

The present modification can also be applied to the second humidifying element 25 according to Modification A.

### REFERENCE SIGNS LIST

21: indoor heat exchanger (heat exchanger)
23: first humidifying element (first collection member)
25: second humidifying element (second collection member)
26: filter
41: refrigerant flow path (first flow path)
42: air flow path (second flow path)
43: first water supply flow path (third flow path)
44: drain flow path (fourth flow path)
45: second water supply flow path (fifth flow path)
46: humidification flow path (sixth flow path)
102: indoor unit (air treatment apparatus)
202: air handling unit (air treatment apparatus)

### CITATION LIST

### PATENT LITERATURE

Patent Literature 1: WO 2015/083297 A

## Claims

1. An air treatment apparatus (102,202) comprising:
a heat exchanger (21) configured to exchange heat between a fluid flowing through a first flow path (41) and air flowing through a second flow path (42); and
a first collection member (23) that is disposed upstream of the heat exchanger in a flow of the air flowing through the second flow path and is configured to collect a substance contained in the air flowing to the heat exchanger,
a third flow path (43) for supplying water at a predetermined temperature to the first collection member
wherein the first collection member has a surface over which water flows or a surface on which water is retained,wherein the air treatment apparatus is configured to promote an inactivation of a substance collected by the first collection member and to adjust a temperature of the air that passes through the first collection member to a target space whose temperature is to be at least adjusted, by supplying water at the predetermined temperature to the first collection member.

2. The air treatment apparatus according to claim 1, further comprising a fourth flow path (44) for discharging the water flowing over the surface of the first collection member or the water retained on the surface of the first collection member.

3. The air treatment apparatus according to any one of claims 1 to 2, further comprising a second collection member (25) that is disposed downstream of the heat exchanger in the air flow and collects the substance contained in the air flowing from the heat exchanger,
wherein the second collection member has a surface over which water flows or a surface on which water is retained.

4. The air treatment apparatus according to claim 3, further comprising a fifth flow path (45) for supplying water at a predetermined temperature to at least one of the first collection member and the second collection member.

5. The air treatment apparatus according to any one of claims 1 to 4, further comprising a filter (26) having lower air flow resistance than the first collection member.

6. The air treatment apparatus according to claim 5, wherein the filter is disposed between the first collection member and the heat exchanger in a direction of the air flow.

7. The air treatment apparatus according to any one of claims 1 to 6, wherein the air treatment apparatus supplies water heat-exchanged with a refrigerant circulating in a refrigeration cycle to the first collection member.

8. The air treatment apparatus according to any one of claims 1 to 7, wherein the first collection member forms a sixth flow path (46) that allows air passing through the first collection member to flow through and that is non-parallel to a direction of the air flow.

9. The air treatment apparatus according to any one of claims 1 to 8, wherein the water flowing over the surface of the first collection member, or the water retained on the surface of the first collection member, contains a component that inactivates the substance.

10. The air treatment apparatus according to any one of claims 1 to 9, wherein the first collection member carries a component that is hardly eluted in water and that inactivates the substance.

11. The air treatment apparatus according to any one of claims 1 to 10, wherein the first collection member carries a photocatalyst that generates a component that inactivates the substance when irradiated with light.

12. The air treatment apparatus according to any one of claims 1 to 11, wherein the first collection member is configured to be replaceable.

## Patentansprüche

1. Luftbehandlungsvorrichtung (102, 202), umfassend:
einen Wärmetauscher (21), der dazu ausgelegt ist, Wärme zwischen einem Fluid, das durch einen ersten Strömungsweg (41) strömt, und Luft, die durch einen zweiten Strömungsweg (42) strömt, auszutauschen; und
ein erstes Sammelelement (23), das stromaufwärts des Wärmetauschers in einer Strömung der durch den zweiten Strömungsweg strömenden Luft angeordnet ist und dazu ausgelegt ist, eine in der zum Wärmetauscher strömenden Luft enthaltene Substanz zu sammeln,
einen dritten Strömungsweg (43) zum Zuführen von Wasser mit einer vorbestimmten Temperatur zu dem ersten Sammelelement
wobei das erste Sammelelement eine Oberfläche, über die Wasser strömt, oder eine Oberfläche, auf der Wasser zurückgehalten wird, aufweist, wobei die Luftbehandlungsvorrichtung dazu ausgelegt ist, eine Inaktivierung einer durch das erste Sammelelement gesammelten Substanz zu fördern und eine Temperatur der Luft, die durch das erste Sammelelement strömt, auf einen Zielraum einzustellen, dessen Temperatur zumindest eingestellt werden soll, indem dem ersten Sammelelement Wasser mit der vorbestimmten Temperatur zugeführt wird.

2. Luftbehandlungsvorrichtung nach Anspruch 1, ferner umfassend einen vierten Strömungsweg (44) zum Abgeben des Wassers, das über die Oberfläche des ersten Sammelelements strömt, oder des Wassers, das auf der Oberfläche des ersten Sammelelements zurückgehalten wird.

3. Luftbehandlungsvorrichtung nach einem der Ansprüche 1 bis 2, ferner umfassend ein zweites Sammelelement (25), das stromabwärts des Wärmetauschers in der Luftströmung angeordnet ist und die in der aus dem Wärmetauscher strömenden Luft enthaltene Substanz sammelt,
wobei das zweite Sammelelement eine Oberfläche, über die Wasser strömt, oder eine Oberfläche, auf der Wasser zurückgehalten wird, aufweist.

4. Luftbehandlungsvorrichtung nach Anspruch 3, ferner umfassend einen fünften Strömungsweg (45) zum Zuführen von Wasser mit einer vorbestimmten Temperatur zu mindestens einem von dem ersten Sammelelement und dem zweiten Sammelelement.

5. Luftbehandlungsvorrichtung nach einem der Ansprüche 1 bis 4, ferner umfassend einen Filter (26) mit einem geringeren Luftströmungswiderstand als das erste Sammelelement.

6. Luftbehandlungsvorrichtung nach Anspruch 5, wobei der Filter in einer Richtung der Luftströmung zwischen dem ersten Sammelelement und dem Wärmetauscher angeordnet ist.

7. Luftbehandlungsvorrichtung nach einem der Ansprüche 1 bis 6, wobei die Luftbehandlungsvorrichtung Wasser, das mit einem Kältemittel wärmegetauscht ist, das in einem Kühlkreislauf zirkuliert, dem ersten Sammelelement zuführt.

8. Luftbehandlungsvorrichtung nach einem der Ansprüche 1 bis 7, wobei das erste Sammelelement einen sechsten Strömungsweg (46) bildet, der es ermöglicht, dass die durch das erste Sammelelement strömende Luft durchströmt, und der nicht parallel zu einer Richtung der Luftströmung ist.

9. Luftbehandlungsvorrichtung nach einem der Ansprüche 1 bis 8, wobei das Wasser, das über die Oberfläche des ersten Sammelelements strömt, oder das Wasser, das auf der Oberfläche des ersten Sammelelements zurückgehalten wird, eine Komponente enthält, die die Substanz inaktiviert.

10. Luftbehandlungsvorrichtung nach einem der Ansprüche 1 bis 9, wobei das erste Sammelelement eine Komponente trägt, die in Wasser kaum eluiert wird und die die Substanz inaktiviert.

11. Luftbehandlungsvorrichtung nach einem der Ansprüche 1 bis 10, wobei das erste Sammelelement einen Photokatalysator trägt, der eine Komponente erzeugt, die die Substanz inaktiviert, wenn sie mit Licht bestrahlt wird.

12. Luftbehandlungsvorrichtung nach einem der Ansprüche 1 bis 11, wobei das erste Sammelelement dazu ausgelegt ist, austauschbar zu sein.

## Revendications

1. Dispositif de traitement d'air (102, 202), comprenant :
un échangeur de chaleur (21) configuré pour échanger de la chaleur entre un fluide s'écoulant à travers un premier trajet d'écoulement (41) et de l'air s'écoulant à travers un deuxième trajet d'écoulement (42) ; et
un premier élément de collecte (23) étant disposé en amont de l'échangeur de chaleur dans un flux d'air s'écoulant à travers le deuxième trajet d'écoulement et
étant configuré pour collecter une substance contenue dans l'air s'écoulant vers l'échangeur de chaleur,
un troisième trajet d'écoulement (43) servant à fournir de l'eau à une température prédéterminée au premier élément de collecte
dans lequel le premier élément de collecte présente une surface sur laquelle l'eau s'écoule ou une surface sur laquelle l'eau est retenue, dans lequel le dispositif de traitement d'air est configuré pour favoriser l'inactivation d'une substance collectée par le premier élément de collecte et pour régler une température de l'air qui passe à travers le premier élément de collecte vers un espace cible dont la température doit être au moins réglée, en fournissant de l'eau à la température prédéterminée au premier élément de collecte.

2. Dispositif de traitement d'air selon la revendication 1, comprenant en outre un quatrième trajet d'écoulement (44) pour évacuer l'eau s'écoulant sur la surface du premier élément de collecte ou l'eau retenue sur la surface du premier élément de collecte.

3. Dispositif de traitement d'air selon l'une quelconque des revendications 1 à 2, comprenant en outre un second élément de collecte (25) étant disposé en aval de l'échangeur de chaleur dans le flux d'air et collectant la substance contenue dans l'air s'écoulant à partir de l'échangeur de chaleur,
dans lequel le second élément de collecte présente une surface sur laquelle l'eau s'écoule ou une surface sur laquelle l'eau est retenue.

4. Dispositif de traitement d'air selon la revendication 3, comprenant en outre un cinquième trajet d'écoulement (45) pour fournir de l'eau à une température prédéterminée à au moins un élément parmi le premier élément de collecte et le deuxième élément de collecte.

5. Dispositif de traitement d'air selon l'une quelconque des revendications 1 à 4, comprenant en outre un filtre (26) ayant une résistance à l'écoulement de l'air inférieure à celle du premier élément de collecte.

6. Dispositif de traitement d'air selon la revendication 5, dans lequel le filtre est disposé entre le premier élément de collecte et l'échangeur de chaleur dans la direction du flux d'air.

7. Dispositif de traitement d'air selon l'une quelconque des revendications 1 à 6, dans lequel le dispositif de traitement d'air fournit, au premier élément de collecte, de l'eau subissant un échange de chaleur avec un réfrigérant s'écoulant dans un cycle de réfrigération.

8. Dispositif de traitement d'air selon l'une quelconque des revendications 1 à 7, dans lequel le premier élément de collecte forme un sixième trajet d'écoulement (46) qui permet à l'air passant à travers le premier élément de collecte de s'écouler et qui n'est pas parallèle à la direction du flux d'air.

9. Dispositif de traitement d'air selon l'une quelconque des revendications 1 à 8, dans lequel l'eau s'écoulant sur la surface du premier élément de collecte, ou l'eau retenue sur la surface du premier élément de collecte, contient un composant qui inactive la substance.

10. Dispositif de traitement d'air selon l'une quelconque des revendications 1 à 9, dans lequel le premier élément de collecte transporte un composant qui est difficilement élué dans l'eau et qui inactive la substance.

11. Dispositif de traitement d'air selon l'une quelconque des revendications 1 à 10, dans lequel le premier élément de collecte contient un photocatalyseur qui génère un composant qui inactive la substance lorsqu'elle est irradiée par la lumière.

12. Dispositif de traitement d'air selon l'une quelconque des revendications 1 à 11, dans lequel le premier élément de collecte est configuré pour être remplacé.
